# EUROPÄISCHE PATENTSCHRIFT

(11) **EP 1 729 104 B1**
(45) Veröffentlichungstag und Bekanntmachung des Hinweises auf die Patenterteilung: **01.12.2010**
(21) Anmeldenummer: 06010842.0
(22) Anmeldetag: 26.05.2006
(51) Int. Cl.: G01L 5/28, G01M 17/007, B60T 17/22

(54) **Verfahren und Vorrichtung zur Durchführung von Bremsenprüfungen bei Kraftfahrzeugen mit Druckluftbremsanlage**
Method and device for carrying out brake tests in motor vehicles with compressed air brake system
Procédé et dispositif destinés à l'exécution de vérifications de freins dans des poids lourds pourvus d'une installation de freins pneumatiques

(30) Priorität: 27.05.2005 DE 102005024335
(43) Veröffentlichungstag der Anmeldung: 06.12.2006
(73) Patentinhaber: MAN Nutzfahrzeuge Aktiengesellschaft, 80996 München (DE); Comitware GmbH, 86899 Landsberg (DE); Hunger Maschinen Vertriebs-GmbH, 86916 Kaufering (DE)
(72) Erfinder: Burger, Michael, 86899 Landsberg/Lech (DE); Korn, Ullrich, 86944 Underdiesen (DE); Augustin, Robert, 86899 Landsberg/Lech (DE); Nitsche, Wolfgang, 86916 Kaufering (DE)
(74) Vertreter: Schäfer, Matthias W.

(56) Entgegenhaltungen:
- EP-A- 1 219 520
- DE-A1- 2 928 615
- DE-A1- 3 326 469
- DE-C1- 4 424 094
- DE-U1- 9 211 172
- DE-U1- 9 311 524
- US-A- 4 520 444

## Beschreibung

### Technisches Gebiet:

Die Erfindung betrifft eine Verfahren und eine Vorrichtung zur Durchführung von Bremsenprüfungen bei Kraftfahrzeugen mit Druckluftbremsanlage, mit dem die Bremskraft der unterschiedlichen Achsen bestimmbar ist.

### Stand der Technik:

Im Rahmen der Erteilung der Allgemeinen Betriebserlaubnis für Typen (§ 20 StVZO) oder der Betriebserlaubnis für Einzelfahrzeuge (§ 21 StVZO) müssen die Bremsanlagen von Fahrzeugen auf die Einhaltung der nationalen Bau- und Betriebsvorschriften (§ 41 StVZO) hin geprüft werden. Für Fahrzeuge, die nach dem 1. Januar 1991 erstmalig in Verkehr gekommen sind, gelten die meist weiterreichenden Anforderungen nach der EU-Richtlinie 71/320/EWG bzw. der Regelung ECE R-13. Die Anforderungen an eine diesen Richtlinien entsprechende so genannte EG-Bremsanlage sind von der jeweiligen Fahrzeugklasse abhängig und betreffen die im Folgenden kurz erläuterten und in der DIN ISO 611 genauer definierten Bremsanlagen:
a) Die Betriebsbremsanlage dient zur Verringerung der Geschwindigkeit des Fahrzeugs, wird von dem Fahrzeugführer mit dem Fuß betätigt und muss abstufbar sein.
b) Die Hilfsbremsanlage muss bei Ausfall der Betriebsbremse deren Funktion mit verminderter Wirkung erfüllen. Diese Bremsanlage muss kein eigenständiges System sein. Vielmehr ist der zweite Kreis einer zweikreisigen Bremsanlage oder eine abstufbare Feststellbremse ausreichend.
c) Die Feststellbremsanlage sichert ein stehendes Fahrzeug gegen Wegrollen. Diese Bremsanlage muss bei Ausfall der Energieversorgung, insbesondere der Druckluftversorgung voll wirken können. Aus diesem Grund ist an dieser Stelle eine mechanische Wirkung auf die Radbremse, bspw. über Seilzug, Gestänge oder Federspeicher, vorgeschrieben.
d) Die Dauerbremsanlage wandelt Lage- oder Bewegungsenergie des Fahrzeugs verschleißlos in Wärme um und ist als Zusatzbremsanlage zu betrachten.
e) Die selbsttätige Bremsanlage bremst Anhängefahrzeuge beim Abreißen der Verbindungseinrichtung bzw. bei Druckverlust in der Vorratsleitung einer Druckluft-Bremsanlage.

In der bereits erwähnten EU-Richtlinie 71/320/EWG sind Lastkraftwagen in die Klasse "N" eingeteilt wobei eine Unterteilung der Klasse "N" in Fahrzeuge bis 3,5 t Gesamtgewicht (N₁), Fahrzeuge von mehr als 3,5 t bis 12 t (N₂) Gesamtgewicht und Fahrzeuge von mehr als 12 t (N₃) Gesamtgewicht erfolgt. Die Lastanhänger befinden sich in der Fahrzeugklasse "O" und sind in die Unterklassen bis 0,75 t (O₁), mehr als 0,75 t bis 3,5 t (O₂), mehr als 3,5 t bis 10 t (O₃) und mehr als 10 t (O₄) eingeteilt.

Die Bremsenprüfung nach der EU-Richtlinie 71/320/EWG umfasst Prüfungen von Bremswegen bei vorgegebener Prüfgeschwindigkeit, von mittleren Vollverzögerungen bzw. Abbremsungen sowie von Betätigungskräften am Fußpedal oder am Handhebel. Dabei ist zu beachten, dass sich die zu erbringenden Verzögerungen bzw. Abbremsungen immer auf das Fahrzeug bei zulässigem Gesamtgewicht, also vollbeladen, beziehen. Da im praktischen Bremsversuch am Rollenprüfstand Fahrzeuge oftmals un- oder teilbeladen überprüft werden, werden die dort ermittelten Bremskräfte auf den vollbeladenen Zustand umgerechnet.

Die wichtigsten Prüfanforderungen an eine Nutzfahrzeug-Bremsanlage sind in den drei folgenden Prüfverfahren enthalten:
- Prüfung Typ 0: Normale Prüfung der Bremswirkung bei kalter Bremse;
- Prüfung Typ I: Prüfung des Absinkens der Bremswirkung nach einem vorgeschriebenen Zyklus sich wiederholender Bremsungen beim Lastkraftwagen bzw. Schleppen eines Anhängers bei 7% Abbremsung und 40 km/h über eine Entfernung von 1700 m;
- Prüfung Typ II: Prüfen des Fahrzeugverhaltens auf langen Gefällstrecken. Die Energieaufnahme muss dabei derjenigen entsprechen, die beim Befahren eines 6%igen Gefälles mit 60 km/h auf einer Strecke von 6 km entspricht.

Gerade bei mehrachsigen Fahrzeugen und insbesondere bei Nutzfahrzeugen mit Anhänger oder Auflieger (Gliederzüge, Sattelzüge) ist die Bereitstellung des richtigen Druckniveaus an den Bremsen der unterschiedlichen Achsen von großer Bedeutung, um einerseits einen sicheren Bremsvorgang des Gesamtzuges zu erreichen und andererseits den Gesamtverschleiß der Bremsanlage zu minimieren. Wird etwa die Bremse einer ersten Achse aufgrund falscher Einstellung nicht optimal genutzt, bewirkt dies eine Überlastung der Bremse an einer zweiten Achse. Dies führt dazu, dass die Bremse an der zweiten Achse verhältnismäßig schnell verschleißt, was eventuelle Sicherheitsrisiken mit sich bringt und auch die Intervalle zwischen den Werkstattaufenthalten eines Fahrzeugs unnötig verkleinert.

Um bei mehrachsigen Fahrzeugen oder bei Nutzfahrzeugen mit Anhänger oder Auflieger die Kraftschlussbedingungen der Fahrbahn beim Bremsvorgang voll ausnutzen zu können, müssen im Idealfall alle Räder gleichzeitig die Kraftschlussgrenze erreichen bzw. an dieser gehalten werden. Bei einer entsprechenden Bremskraftregelung ist vor allem auch die Verteilung der Last auf dem Fahrzeug, also die unterschiedliche Belastung der verschiedenen Achsen zu berücksichtigen. Die Anforderungen an die Güte einer entsprechenden Bremskraftregelung sind ebenfalls in der EU-Richtlinie 71/320/EWG festgelegt. Danach muss die Bremskraftaufteilung so optimiert sein, dass in Abhängigkeit der Kraftschlussbedingungen zwischen Reifen und Fahrbahn immer eine Mindestbremsung erreicht wird.

Seit dem 1.12.1999 hat eine neue Sicherheitsprüfung (SP) die bis dahin vorgeschriebene Bremsen-Sonderuntersuchung (BSU) und Zwischenuntersuchung (ZU) abgelöst. Die Sicherheitsprüfung gilt für Lastkraftwagen mit einem zulässigen. Gesamtgewicht von mehr als 7,5 t sowie für Anhänger mit einem zulässigen Gesamtgewicht von mehr als 10 t. Die somit derzeit vorgeschriebene Sicherheitsprüfung darf entsprechend der Neuordnung der Technischen Fahrzeugüberwachung gemäß § 29 StVZO nur noch durch anerkannte Werkstätten sowie Prüfanstalten, wie etwa TÜV oder DEKRA, vorgenommen werden. Für Lastkraftwagen mit einem zulässigen Gesamtgewicht von 7,5 bis 12 t und Anhänger ist die erste Sicherheitsprüfung nach 3,5 Jahren, für alle größeren LKW nach 2,5 Jahren fällig. Nach diesem Zeitpunkt findet die Sicherheitsprüfung jährlich im Wechsel mit der ebenfalls jährlichen Hauptuntersuchung (HU) statt.

Für den Betreiber eines Nutzfahrzeugs stehen neben dem Sicherheitsaspekt somit zwei wesentliche Gesichtspunkte bei der Instandsetzung und Wartung einer Bremsanlage im Vordergrund. Zum einen müssen alle gesetzlichen Vorschriften eingehalten werden, damit nicht die Betriebserlaubnis eines Fahrzeugs erlischt, zum anderen sollte aber auch das Verschleißverhalten einer Bremsanlage derart optimiert werden, dass die Intervalle zwischen den einzelnen Werkstattaufenthalten minimiert und bestenfalls jeweils mit den vorgeschriebenen Untersuchungen (SP, HU) zusammenfallen. Hierbei ist zu berücksichtigen, dass sich die gesetzlichen Vorgaben im Wesentlichen auf das Verhalten einer Bremsanlage in Notbremssituationen beziehen, während der Verschleiß einer Bremsanlage in der Hauptsache durch Bedarfsbremsungen bzw. Anpassungsbremsungen hervorgerufen wird.

Zu einer Standardprüfung einer Bremsanlage in einer Werkstatt gehört daher neben der statischen Bremsenprüfung, die in der Regel auf einem Rollenprüfstand durchgeführt wird, auch eine dynamische Bremsenprüfung, die während der Fahrt des Fahrzeugs auf dem Werkstattgelände bzw. einer Versuchs- oder Teststrecke durchgeführt wird. Hauptziel einer derartigen Überprüfung des dynamischen Verhaltens einer Bremsanlage ist die Abstimmung der Bremsanlage des Gesamtzuges, so dass die Bremskraft der einzelnen Achsen hinsichtlich des in unterschiedlichen Verkehrssituationen und bei unterschiedlicher Beladung vorhandenen Bremskraftbedarfs optimiert wird.

Aus der DE 30 00 545 C2 ist ein tragbares Bremsenprüfgerät zum Einstellen und Überprüfen von pneumatisch oder hydraulisch angesteuerten automatisch lastabhängigen Bremskraftreglern (ALB-Ventilen) bekannt. Dieses Bremsenprüfgerät soll insbesondere zur Durchführung der Bremsensonderuntersuchungen zur StVZO §29 und der Überprüfung gemäß EG Richtlinie 71/320 dienen und eine einfache, bequeme und schnelle Einstellung und Überprüfung von pneumatisch oder hydraulisch angesteuerten ALB-Ventilen ermöglichen. Das Bremsenprüfgerät weist dabei mehrere Gewindeanschlussbuchsen zur Aufnahme von Druckschläuchen auf, deren Druck über im Bremsenprüfgerät angeordnete Manometer angezeigt und über jeweilige Schaltventile angezeigt werden kann. Die exakte Einstellung und Überprüfung des ALB-Ventils erfolgt dabei durch Vorgabe von Vorratsdruck, Bremsdruck und Steuerleitungsdruck, je nach Auslegung des Fahrzeuges bzw. Angaben des Herstellers.

Ferner offenbart die DE 33 26 469 C2 ein Steuergerät zur Durchführung der Bremsenprüfung bei Kraftfahrzeuganhängern, die mit Druckluftbremsen versehen sind und elektrische sowie pneumatische Anschlussleitungen mit Kupplungsköpfen zur Verbindung mit zugwagenseitigen Kupplungsstücken aufweisen. Dabei weist das Steuergerät eingangsseitig einen Versorgungsanschluss und ein diesem nachgeordnetes Druckminderventil und ausgangsseitig den anhängerseitigen Kupplungsköpfen entsprechende, durch Kupplungsköpfe gebildete Anschlüsse für Vorratsdruck und Bremsdruck auf. Mit diesem Steuergerät sollen Bremsenprüfungen nach den durch gesetzliche Vorschriften vorgegebene Spezifikationen in vollem Umfang durchgeführt werden. Dabei sollen sowohl stationäre Bremsprüfungen für Kraftfahrzeuganhänger, d.h. beispielsweise auf einem Rollenprüfstand, als auch Prüfungen bei vom Zugwagen gezogenen Anhängern durchgeführt werden können. Durch die Zuordnung jeweils eines Manometers zu den Kugelköpfen am Steuergerät, ist eine unmittelbare Beobachtung des Druckverlaufs bei der Bremsenprüfung für alle wesentlichen Funktionen vorgesehen. Dabei soll es möglich sein, sämtliche Funktionen über das Steuergerät während der Fahrt auch durch Fernbedienung vom Fahrerhaus aus zu Prüfen.

Insgesamt beschränken sich die Prüfmöglichkeiten an Fahrzeugen mit Druckluftbremsanlagen des bis dahin bekannten Standes der Technik auf die Benutzung von Manometern, diversen losen oder auf Trommeln aufgewickelten Schläuchen, Prüfkoffern, in welchen zwei oder drei Manometer fest installiert sind und bei denen die bis zu zehn Prüfstellen einzeln angeschlossen werden müssen.

Eine Verbesserung wurde hier durch das deutsche Gebrauchsmuster DE 92 11 172 U1 geschaffen, in dem ein portables, elektronisches Prüfgerät für Druckluftbremsanlagen von Nutzfahrzeugen beschrieben ist. Bei dem darin beschriebene Prüfgerät werden alle am Zugfahrzeug oder am Anhänger bzw. Auflieger vorhandenen Prüfanschlüsse über Druckluftleitungen mit einer Sensoreinheit verbunden. Die gemessenen Drücke werden dann durch die Drucksensoren in elektronische Signale umgewandelt, die von einer Rechen- und Steuereinheit weiterverarbeitet werden. Der Rechner besteht dabei aus einer Tastatur und einem LC-Display. Die Prüfergebnisse können ausgedruckt und dokumentiert werden. Sämtliche vorgeschriebenen Prüfungen werden programmgesteuert durchgeführt und es müssen während der Prüfung keine Druckluftleitungen umgesteckt werden, so dass sich der Prüfer ganz auf die Prüfung konzentrieren kann. Da für jeden Fahrzeugtyp die korrekten Druckwerte vorgegeben werden, entfällt eine weitere Fehlerquelle beim Vergleichen der Messwerte mit falschen Referenzwerten. Schließlich können die Drucksensoren ihre Daten auch per Funksignal an einen Rechner weitergeben, wodurch die Montage elektrischer Leitungen zur Signalübertragung entfällt.

Zwar stellt letztgenannter Stande der Technik bereits einen erheblichen Fortschritt gegenüber den bisher üblichen Prüfgeräten dar, allerdings werden auch hier zunächst nur analoge Messsignale auf einem speziellen Prüfrechner sichtbar gemacht. Eine automatische Auswertung der Messergebnisse erfolgt hier nicht. Auch bleibt es dem Prüfer überlassen, welche Druckprüfungen er in welcher Reihenfolge veranlasst, was eine erhebliche Fehlerquelle darstellt, da im Alltagsbetrieb aufgrund von Zeit- und Termindruck aber auch durch äußere Ablenkungen einzelne Prüfpunkte vergessen werden können. Zusatzinformationen, wie die Bremsentemperatur, Dicke der Bremsbeläge und Bremsscheiben, Achslasten etc. werden hier nicht berücksichtigt.

Aufgabe der vorliegenden Erfindung ist es daher, ein Verfahren sowie eine Vorrichtung anzugeben, das/die mit verhältnismäßig einfachen Mitteln zügig eine genaue und vor allem reproduzierbare Prüfung der Druckluftbremse eines Nutzfahrzeugs, ggf. unter Hinzuziehung von Zusatzinformation ermöglicht. Hierbei soll insbesondere für die Bedienperson die Zugabstimmung einer Bremsanlage bzgl. der an den verschiedenen Achsen eines Gesamtzuges, bestehend aus Zugfahrzeug und Anhänger oder Auflieger, wirkenden Bremskräfte im Vergleich zu den bisher bekannten Prüf- bzw. Messverfahren vereinfacht und ein fehlerfreier Prüfdurchlauf sichergestellt werden. Ferner soll sowohl eine statische als auch eine dynamischen Prüfung einer Bremsanlage durch eine Bedienperson, und zwar ohne dass die Bedienperson bei laufender Prüfung das Fahrerhaus eines Nutzfahrzeugs verlassen muss, durchführbar sein. Ferner soll eine automatische Auswertung auf handelsüblichen Datenverarbeitungseinheit möglich sein.
Ein weiterer Vorteil besteht darin dass die Messung der Drücke ohne Beeinflussung und/oder Veränderung des Fahrzeugs während der fahrt in alltagsüblichen Situationen erfolgt.

Diese Aufgabe wird durch ein Verfahren mit den Merkmalen des Patentanspruchs 1 und eine Vorrichtung mit den Merkmalen des Patentanspruchs 11 gelöst. Vorteilhafte Ausgestaltungen und Weiterbildungen sind in den Unteransprüchen angegeben.

Die Lösung der vorstehenden Aufgabe wird bei dem erfindungsgemäßen Verfahren zur Prüfung einer Druckluftbremsanlage eines Nutzfahrzeugs im Wesentlichen dadurch erreicht, dass die Schritten wie in Anspruch 1 offenbart, abgearbeitet werden.

Wesentlich bei dem vorbeschriebenen Verfahrensablauf ist, dass bereits während des Betriebs eines Nutzfahrzeugs der innerhalb wenigstens eines Bremskreises herrschende Druck erfasst und an eine Datenerfassungs- bzw. -verarbeitungseinheit übertragen wird. Ein derartiges Messverfahren kann sowohl bei einer statischen Prüfung auf dem Prüfstand als auch bei einer dynamischen Prüfung während der Fahrt durchgeführt werden und ist sowohl bei Nutzfahrzeugen mit oder ohne angekuppelten Anhänger bzw. aufgesatteltem Auflieger einsetzbar. Vorzugsweise erfolgt die Erfassung der Druckwerte mittels Sensoren, die an den Prüfanschlüssen, die in den Kreisen der Bremsanlage und/oder an den Bremselementen vorgesehen sind, angebracht werden.

Vorzugsweise erfolgt die Messung des Drucks der verdichteten Luft jeweils in den vier Vorratskreisen des Nutzfahrzeugs sowie im Vorrats- und Bremskreis des Anhängers bzw. Aufliegers. Darüber hinaus ist es denkbar, die Messung auch auf die in den Bremszylindern herrschenden Drücke auszuweiten. In einer ganz besonders geeigneten Weiterbildung der Erfindung wird an wenigstens einem Bremselement zusätzlich die Temperatur erfasst. Eine derartige Temperaturmessung bspw. der Bremstrommeltemperatur, die unter anderem Aussagen über den Betriebszustand einer Bremse zulässt, erfolgt heute noch weitgehend manuell mit Hilfe entsprechender Temperaturmesseinrichtungen (berührungslos mittels Infrarotthermometer).
Sind die bei bestimmten Betriebszuständen an den Bremszylindern der Achsen anliegenden Drücke ermittelt worden, so kann mit diesen Werten auf bevorzugte Weise eine Messung der Bremskraft der einzelnen Achsen bei dem entsprechenden Druck auf einem Rollenprüfstand durchgeführt werden. Auf diese Weise sind auch Aussagen über die bei den tatsächlich im Straßenverkehr auftretenden Bremsfällen benötigten Bremskräfte an den einzelnen Achsen möglich.

Der wenigstens eine an die Datenverarbeitungseinheit übertragene Messwert wird gespeichert, ausgewertet und verarbeitet, wobei die Datenverarbeitungseinheit ihrerseits hierfür verschiedene, ggf. räumlich von einander beabstandete Komponenten, wie etwa Speichereinheit, Auswerteeinheit und/oder Übertragungseinheit, aufweist.

Die aufbereiteten Daten werden schließlich an eine Ausgabeeinheit übertragen, wobei es sich bei dem Ausgabeelement vorzugsweise um eine Datenschnittstelle handelt, an die ein externer Datenspeicher, eine externe Datenverarbeitungseinheit oder ein Display anschließbar ist. Selbstverständlich ist es auch denkbar, die aufbereiteten Messwerte über das Ausgabeelement an einen Fahrzeugführungsrechner und/oder an ein im Fahrerhaus vorgesehenes Zentraldisplay zu übertragen. Eine weitere vorteilhafte Ausführungsform sieht ferner vor, dass sich die Ausgabeeinheit nicht innerhalb des Fahrzeugs befindet, sondern etwa in der Werkstatt. Auf diese Weise kann bspw. ein Druck innerhalb der Druckluftbremsanlage auf einer Teststrecke erfasst und schließlich an einen im Werkstattbüro befindlichen Rechner übermittelt werden. Die Datenübertragung zwischen der Datenerfassungs- bzw. -verarbeitungseinheit im Fahrzeug und dem externen Rechner erfolgt in diesem Fall drahtlos, vorzugsweise über eine Funkdatenverbindung. Genauso ist es denkbar, dass die Übertragung der an den Bremskreisen und/oder den Bremselementen aufgenommenen Messwerte an das Datenerfassungsgerät drahtlos erfolgt oder die Messwerte sogar direkt ohne Zwischenspeicherung im Fahrzeug an einen externen Rechner übertragen werden.

In einer besonderen Ausführungsform werden verschiedene Prüfabläufe, die verschiedene Prüfschritte aufweisen, in der Datenverarbeitungseinheit gespeichert und der Bedienperson angezeigt, so dass diese durch das Prüfprogramm geführt wird. Auf diese Weise wird sichergestellt, dass die gesetzlich vorgeschriebenen Prüfungen vorgenommen werden und auch alle Einzelprüfungen durchgeführt werden. Dementsprechend kann der gesamte Prüfablauf mit den aufgenommenen Messwerten protokolliert werden. Insbesondere für die Auswertung von Unfällen stehen die so aufgenommenen Werte jeder Zeit zur Verfügung. Genauso kann die Prüfung jeder Zeit unterbrochen und zu einem beliebigen Zeitpunkt wieder aufgenommen werden.

Eine weitere vorteilhafte Ausgestaltung des Verfahrens sieht vor, dass an den Vorratsbremskreisen des Nutzfahrzeugs und/oder des Anhängers bzw. Aufliegers Ventileinheiten vorgesehen werden, durch die der Druck in den einzelnen Kreisen auf einen vorgebbaren Wert absenkbar ist. Besonders geeignet ist in diesem Zusammenhang die Verwendung von Magnetventilen, die an den Vorratsbehältern angebracht und aus dem Fahrerhaus, vorzugsweise über eine Dateneingabeeinheit der Datenverarbeitungseinheit, zu betätigen sind. Auf diese Weise ist es möglich, den Druck in den einzelnen Bremskreisen auf einen bestimmten Wert abzusenken, sobald der Prüfablauf dies erfordert. Selbstverständlich kann dieser Vorgang automatisiert werden, indem der Druck zumindest eines Bremskreises automatisch von dem System auf den gewünschten Wert abgesenkt wird, sobald die Bremsenprüfung dies erforderlich macht.

Die in der Bremsanlage erfassten Drücke werden in Echtzeit erfasst und ggf. einem bestimmten Betriebszustand des Fahrzeugs zu diesem Zeitpunkt zugeordnet. Erfordert ein Prüfschritt bspw., dass in einem Bremskreis oder auch am Druckluft-Kupplungskopf, an den die Bremsleitung eines Anhängers anschließbar ist, ein bestimmter Druck eingesteuert werden soll, so wird der Fahrer zunächst vom Prüfsystem aufgefordert, diesen Druck über eine entsprechende Stellung des Fußpedals einzustellen und sobald der gewünschte Druck im Bremskreis oder am Kupplungskopf anliegt, werden die an den Bremselementen der verschiedenen Achsen anliegenden Drücke erfasst und dem aufgrund der Fußpedalstellung erzeugten Ausgangsdruck zugeordnet. Auf diese Weise wird etwa ermittelt, welcher Betriebsdruck bei einem Druck von 1,5 bar am Kupplungskopf der Bremsleitung in den Bremszylindern der verschiedenen Anhängerachsen anliegt. Werden wenigstens zwei, vorzugsweise drei dieser Messungen bei 1, 1,5 und 2 bar am Kupplungskopf der Anhängerbremsleitung durchgeführt, kann auf besonders bevorzugte Weise eine Zugabstimmung, also die Angleichung der an den verschiedenen Achsen eines Zuges anliegenden Bremsdrücke, vorgenommen werden.

Selbstverständlich ist es darüber hinaus ebenfalls denkbar, weitere mit Druckluft beaufschlagte Versorgungskreise eines Nutzfahrzeugs, wie etwa den Kreis der Luftfederung, den lastabhängigen Bremskraftregler oder auch den Eingangsdruck am Anhängersteuerventil zu überprüfen. Hierzu müssen lediglich entsprechende Messpunkte vorgesehen und die Messwerte an die Datenverarbeitungseinheit übertragen werden.

Eine weitere vorteilhafte Gestaltung des erfindungsgemäßen Verfahrens sieht vor, dass während der Fahrt des Nutzfahrzeugs die Druckverhältnisse, die bei üblicher, verkehrsangepasster Fahrweise an den Bremselementen der Achsen herrschen, aufgezeichnet werden und so ein fahrerspezifisches Profil erstellt wird. Mit einem derartigen Verfahren ist es insbesondere möglich, bei der Einstellung der Bremsen auch die Fahrweise des Fahrers und hierbei insbesondere das Auftreten sowie die Art und Verteilung von Anpassungsbremsungen zu berücksichtigen. Dies ist von besonderer Bedeutung, da die so genannten Anpassungsbremsungen einen Großteil der im Straßenverkehr auftretenden Bremsungen ausmachen.

Neben dem Verfahren betrifft die Erfindung auch eine Vorrichtung zur Durchführung eines Verfahrens zur Überprüfung einer Druckluftbremsanlage. Die Vorrichtung verfügt über eine Datenverarbeitungseinheit sowie wenigstens einen Sensor, mit dem der in einem Bremskreis und/oder an einem Bremselement anliegende Druck erfassbar ist. Hierbei ist die Vorrichtung derart ausgestaltet, dass die mit dem wenigstens einen Sensor erfassten Messwerte an die Datenverarbeitungseinheit übertragen und dort gespeichert, ausgewertet und/oder an eine weitere Datenverarbeitungsanlage übertragen werden. Weiterhin verfügt die Datenverarbeitungseinheit über ein Speicherelement, in dem zumindest ein Prüfablauf mit unterschiedlichen Prüfschritten hinterlegt ist, so dass eine Bedienperson durch die einzelnen Prüfschritte geleitet wird und erst einen weiteren Prüfschritt aufrufen kann, wenn der vorherige ordnungsgemäß abgearbeitet ist. Die Vorrichtung ist leicht zu transportieren und eignet sich somit bspw. auch zum Einsatz bei Unfällen, bei denen schnell eine Fehlerdiagnose am Fahrzeug vorgenommen werden soll.

Die auch als Prüfbox zu bezeichnende Datenverarbeitungseinheit verfügt vorzugsweise über Datenschnittstellen, über die die erfassten Druckmesswerte in die Datenverarbeitungseinheit eingelesen werden, einen Datenlogger zur Speicherung der Messwerte sowie über weitere Datenschnittstellen, an die externe Geräte, wie Drucker, Display, Fahrzeugführungsrechner und/oder eine externe Datenverarbeitungseinheit, anschließbar sind.

In der erfindungsgemäßen Vorrichtung zur Überprüfung der in den Druckluftversorgungskreisen eines Nutzfahrzeugs herrschenden Drücke erfolgt die Übertragung der Messwerte von den Messwertaufnehmern zur Datenverarbeitungseinheit drahtlos, vorzugsweise über eine Funkverbindung. Hierzu verfügen sowohl die Messwertaufnehmer bzw. Sensoren als auch die Datenverarbeitungseinheit über entsprechende Sende- bzw. Empfangseinheiten.

Eine weitere vorteilhafte Weiterbildung der Erfindung sieht darüber hinaus an wenigstens einem Bremskreis ein Druckablasselement, vorzugsweise ein Magnetventil, vor, mit dem der Druck in dem entsprechenden Bremskreis auf einen vorgebbaren Wert abgelassen werden kann. Vorzugsweise sind die Ventile derart von der Datenverarbeitungseinheit ansteuerbar, dass der Druck in einem Bremskreis durch manuelle Eingabe in eine Dateneingabeeinheit und/oder automatisch bei Erreichen eines entsprechenden Prüfschritts auf den eingegebenen oder hinterlegten Wert eingestellt wird. Vorzugsweise werden derartige Ventile an den Vorratsbehältern der Vorratskreise befestigt.

Im Folgenden wird ohne Beschränkung des allgemeinen Erfindungsgedankens eine Prüfbox erläutert, die in der Figur schematisch dargestellt ist.

Die Prüfbox dient der Aufzeichnung von Messwerten und/oder als Anzeigeeinheit mit Interfaceanbindung zwischen den im Bremssystem eines Nutzfahrzeugs bzw. eines Anhängers oder Aufliegers vorgesehenen Drucksensoren und einem Notebook. An den Prüfanschlüssen der verschiedenen Bremskreise des Nutzfahrzeugs bzw. des Anhängers sind Drucksensoren vorgesehen, die über eine Telemetrie-Datenübermittlung, insbesondere eine Funkdatenverbindung, mit der Prüfbox verbunden sind. Ein in die Prüfbox integriertes elektronisches Bauelement gibt die aktuellen Messwerte an ein Notebook weiter. Die Bedienperson ermittelt auf diese Weise die Systemdrücke in den unterschiedlichen Bremskreisen bzw. an den Bremszylindern.

Mit Hilfe einer auf dem Notebook installierten Software werden die Messwerte für den Druck in Echtzeit erfasst und abgelegt. Mit dem Start eines definierten Bremsenprüfprozesses, bspw. nach der Prüfschrittliste "Sicherheitsprüfung" nach § 29 und Anlage VII StVZO, die im Folgenden abgebildet ist, wird die Bedienperson zwangsgeführt, d. h. es kann weder ein Prüfschritt ausgelassen noch manipuliert werden. Die ermittelten Daten werden gespeichert und sind als Prüfprotokoll, bspw. über einen Drucker auszugeben.

Anwendungsbereich des erfindungsgemäßen Verfahrens sowie der Vorrichtung:
- Anlässlich einer Hauptuntersuchung nach § 29 StVZO (HU),
- Anlässlich einer Sicherheitsprüfung nach § 29 StVZO (SP),
- Diagnose der Bremsanlage eines Nutzfahrzeugs und/oder Anhängers bzw. Aufliegers (nach RREG 71/320 EWG),
- Angleichung der Bremskräfte (Zugabstimmung),
- Überprüfung der Bremsanlage an Nutzfahrzeug und/oder Anhänger/Auflieger durch die Verkehrswacht,
- Überprüfung des Beladungszustandes an Nutzfahrzeug und/oder Anhänger/Auflieger durch die Verkehrswacht,
- Diagnose der Luftfederanlage.

Im Folgenden ist beispielhaft ein Prüfabläufe mit den entsprechenden Prüfschritten angegeben, wie er dem vorbeschriebenen System zugrunde gelegt werden kann. Dabei ist der Prüfablauf vom jeweiligen Fahrzeugtyp, d.h. Nkw mit oder ohne Anhänger, Anhänger, Bus, Zweiachser, Dreiachser, Vierachser, etc. abhängig. Vor der Prüfung müssen die Fahrzeug- und Bremsbezogenen Daten in das Software-Programm eingegeben werden. In der nachfolgenden tabellarischen Übersicht bedeuten die Ausdrücke "Anzeige Grün", Prüfung in Ordnung. "Anzeige Gelb" Prüfschritt in Arbeit - Keine Aktivitäten seitens des Prüfers erforderlich. "Anzeige Rot" Fehlererkennung und automatische Speicherung mit Dokumentation. Ferner ist der Punkt "Funktionsprüfung Lösen der BBA" ein zusätzlicher Prüfschritt, der nicht in § 29 StVZO gefordert wird. Hierdurch wird eine vollständige Bremsenprüfung ermöglicht.

**4. Prüfablauf Baureihe MAN-TGA SP-Prüfbereich 5 "zu Funktionsprüfung"**

| Prüfschritt | Prüfablauf Anwender | Sensor | Textmeldung am Bildschirm | Prüfablauf Software | Druckerausgabe | Bestätigung |
|---|---|---|---|---|---|---|
| 1.1 1 | **Kompressor mit Abschaltdruck** | P1 | Funktionsprüfung | Einschaltdruck | | Ja |
| | Info: Anlage unter Einschaltdruck bringen durch | | Druckregler | Druckregler 10.5bar | | |
| | Entlüften der Vorratsbehälter Kreis I oder II | | | Weiter zu 1.2 | | |
| | | | | = Anzeige Grün | | |
| | | | | Nicht weiter in 1.1 | | |
| | | | | = Anzeige Rot | Ja | |
| 1.2 | Motor starten | P1 | Funktionsprüfung | = Anzeige Gelb | | |
| | Info: Motor ist im Leerlauf | | Druckregler | P1= < 10bar | | |
| | | | | P1= Druck ist ansteigend | | |
| | | | Druckwert erreicht, | P1= Abschaltdruck ist | | |
| | | | Abschaltdruck | erreicht 12.5bar, dann | | |
| | | | | weiter zu 1.3 | | |
| | | | | = Anzeige Grün | | |
| | | | | Nicht weiter in 1.2 | | |
| | | | | = Anzeige Rot | Ja | |
| 1.3 | Motor ist im Leerlauf | P1 | Funktionsprüfung | = Anzeige Gelb | | |
| | Info: Druckabsenkung auf Einschaltdruck | | Druckregler | Vergleich Sollwert/Istwert | | |
| | | | | P1= Einschaltdruck ist | | |
| | | | Druckwert erreicht, | erreicht 10.5bar | | |
| | | | Einschaltdruck | = Anzeige Grün | Ja | |
| 1.4 | Motor erreicht Nenndrehzahl | P1 | Funktionsprüfung | = Anzeige Gelb | | |
| | Info: über EDC- Lenkstockschalter anfahren | | Druckregler | Stoppuhrfunktion "Ein" | | |
| | | | | P1= Druckwert ist | | |
| | | | Nenndrehzahl Sollwert | ansteigend | | |
| | | | =1200min-1 | | | |
| 1.5 | Abschaltdruck wird erreicht | P1 | Angabe der Verweildauer | P1= 12.5 bar > 1 sec. | | Ja |
| | Info: Motor abstellen über "Zündung Aus" | | in sec. | Stoppuhrfunktion "Aus" | | |
| | Auswertung der Kompressor- Förderleitung | | Funktionsprüfung | Anzeige Gelb | | |
| | | | Kompressor Füllzeit | P1= Abschaltdruck ist | | |
| | | | Prüfschritt abgearbeitet | erreicht 12.5bar | | |
| | | | Weiter mit | Anzeige Grün | Ja | |
| | | | Funktionsprüfung | | | |
| | | | Dichtheit | | | |
| 2.1 | **Vorratsdruck** | P1; P2; P3; | Funktionsprüfung | P1= 12,5 bar | | Ja |
| | | P4; | | | | |
| | Info: Prüfen durch ablesen der Drucksensoren | P5 | Vorratsdruck | P2= 12,5 bar | | |
| | | | | P3= 8,1 bar | | |
| | | | Vorratsdruck Kreis 1 | P4= 10, 0 bar | | |
| | | | Vorratsdruck Kreis 2 | P5= 12,5 bar | | |
| | | | Vorratsdruck Kreis 3 | Vergleich Sollwert/Istwert | | |
| | | | Vorratsdruck Kreis 4 | =Anzeige Grün | Ja | |
| | | | Vorratsdruck Kreis 5 | Nicht weiter in 2.1 | | |
| | | | | = Anzeige Rot | Ja | |
| 2.2 | **Dichtheit der Anlage** | P6 | Funktionsprüfung | = Anzeige Grün | | Ja |
| | Info: Bremskraftregler in Volllast-Stellung | | Dichtheit der Anlage | P6= 2 bar | Ja | |
| | Einsteuern der BBA 2 bar Bremszylinderdruck | | | P6= < 2 bar | | |
| | über betätigte BBA | | | Nicht weiter in 2.2 | Ja | |
| | Hilfsmittel: Pedalspreize | | | = Anzeige Rot | | |
| 2.3 | Dichtheit ermitteln | P1; P2; P3; | Funktionsprüfung | = Anzeige Gelb | | Ja |
| | | P4; | | | | |
| | Info: Druck in den Kreisen 1-5 messen | P5; P6 | Dichtheit der Anlage | Stoppuhrfunktion "Ein" | | |
| | | | | P1= 12.5 bar > 60 sec. | Ja | |
| | | | BBA betätigt | P2= 12.5 bar > 60 sec. | Ja | |
| | | | -Teilbremsung- | P3= 8.1 bar> 60 sec. | Ja | |
| | | | | P4= 10, 0 bar > 60 sec. | Ja | |
| | | | | P5= 12.5 bar > 60 sec. | Ja | |
| | | | | Stoppuhrfunktion "Aus" | | |
| | | | | Anzeige Grün | | |
| | | | | Nicht weiter in 2.3 | | |
| | | | | Anzeige Rot | Ja | |
| 2.4 | Dichtheit ermitteln | | P1; P2; P3; Funktionsprüfung | =Anzeige Gelb | | Ja |
| | | P4; | | | | |
| | Info: Druck in den Kreisen 1-5 messen | P5; P6 | Dichtheit der Anlage | Stoppuhrfunktion "Ein" | | |
| | Der Druck in den jeweiligen Kreisen darf nicht | | | P1= 12.5 bar > 180 sec. | Ja | |
| | mehr als 0,4 bar abgefallen sein! | | BBA betätigt - | P2= 12.5 bar > 180 sec, | Ja | |
| | | | Teilbremsung | P3= 8.1 bar > 180 sec. | Ja | |
| | | | | P4= 10. 0 bar > 180 sec. | Ja | |
| | | | | P5= 12.5 bar > 180 sec. | Ja | |
| | | | | Stoppuhrfunktion "Aus" | | |
| | | | | Anzeige Grün | | |
| | | | | Nicht weiter in 2.3 | | |
| | | | | = Anzeige Rot | Ja | |
| 2.5 | Pedalspreize entfernen | | Funktionsprüfung | = Anzeige Gelb | | |
| | | | Lösen der BBA | P6; P7 = > 2 bar vor | | |
| | | | | Prüfbeginn | | |
| | | | | P6; P7 = 0 bar | | |
| | | | | innerhalb 2 sec. | | |
| | | | | =Anzeige Grün | Ja | |
| | | | | P6; P7 = > 0 bar | | |
| | | | | Nicht weiter in 2.5 = Anzeige Rot | Ja | |
| 3.1 | **Drucksicherung BBA Kreis 1 = 0 bar** | P1; P2; P3; | Funktionsprüfung | = Anzeige Gelb | | Ja |
| | | P4 | | | | |
| | Abhängig der Konstruktion der Einrichtung | | Warneinrichtung | P1= > 6,0 bar | | |
| | -> Vierkreisschutzventil | | -Kreis 2- | WALA leuchtet | Ja | |
| | Kreis 1 schnell auf 0 bar durch entlüften bringen | | | P1= 0 bar | Ja | |
| | Dazu Warrneinrichtung Kreis 1 prüfen | | Funktionsprüfung | P2= > 4,5 bar | Ja | |
| | | | Vierkreisschutzventil | P3= > 4,5 bar | Ja | |
| | | | -Kreis 1- | P4= > 4,5 bar | Ja | |
| | | | | P5= > 4,5 bar | Ja | |
| | | | | = Anzeige Grün | Ja | |
| | | | | Nicht weiter in 3.1 | | |
| | | | | =Anzeige Rot | Ja | |
| 3.1,1 | Anlage befüllen > 7.0 bar | | | | | |
| 3.2 | **Drucksicherung BBA Kreis 2 = 0 bar** | P1; P2; | Funktionsprüfung | =Anzeige Gelb | | Ja |
| | | P3; P4 | | | | |
| | Abhängig der Konstruktion der Einrichtung | | Warneinrichtung | P2= > 6,0 bar | | |
| | -> Vierkreisschutzventil | | -Kreis 1- | WALA leuchtet | Ja | |
| | Kreis 2 schnell auf 0 bar durch entlüften | | | P2= 0 bar | Ja | |
| | bringen | | | | | |
| | Dazu Wameinrichtung Kreis 2 prüfen | | Funktionsprüfung | P1= > 4,5 bar | Ja | |
| | | | Viericreisschutzventil | P3= > 4,5 bar | Ja | |
| | | | -Kreis 2- | P4= > 4,5 bar | Ja | |
| | | | | P5= > 4,5 bar | Ja | |
| | | | | = Anzeige Grün | Ja | |
| | | | | Nicht weiter in 3.1 | | |
| | | | | = Anzeige Rot | Ja | |
| 3.2,1 | Anlage befüllen > 7.0 bar | | | | | |
| 3.3 | **Drucksicherung BBA Kreis 3 = 0 bar** | P1; P2; | Funktionsprüfung | = Anzeige Gelb | | Ja |
| | | P3; P4 | | | | |
| | Abhängig der Konstruktion der Einrichtung | | Warneinrichtung | P3= > 6,0 bar | | |
| | -> Vierkreisschutzventil | | -Kreis 3- | WALA leuchtet | Ja | |
| | Kreis 4 schnell auf 0 bar durch entlüften | | | P3= 0 bar | Ja | |
| | bringen | | | | | |
| | Warneinrichtung Kreis 4 prüfen | | Funktionsprüfung | P1= > 4,5 bar | Ja | |
| | | | Vierkreisschutzventil | P2= > 4,5 bar | Ja | |
| | | | -Kreis 3- | P4= > 4,5 bar | Ja | |
| | | | | P5= > 4,5 bar | Ja | |
| | | | | = Anzeige Grün | Ja | |
| | | | | Nicht weiter in 3.1 | | |
| | | | | = Anzeige Rot | Ja | |
| 3.3.1 | Anlage befüllen > 7.0 bar | | | | | |
| 3.4 | **Drucksicherung BBA Kreis 4 0 bar** | | Funktionsprüfung | = Anzeige Gelb | | |
| | P1; P2; P3; P4 | | | | Ja | |
| | Abhängig der Konstruktion der Einrichtung | | Warneinrichtung | P4= > 6,0 bar | | |
| | -> Vierkreisschutzventil | | -Kreis 4- | WALA leuchtet | Ja | |
| | Kreis 3 schnell auf 0 bar durch entlüften bringen | | | P4= 0 bar | Ja | |
| | Wameinrichtung Kreis 3 prüfen | | Funktionsprüfung | P1= > 4,5 bar | Ja | |
| | | | Vierkreisschutzventil | P2= > 4,5 bar | Ja | |
| | | | -Kreis 4- | P3= > 4,5 bar | Ja | |
| | | | | P5= > 4,5 bar | Ja | |
| | | | Funktionsprüfung | P9= > 4,5 bar | Ja | |
| | | | BBA- Anhängefahrzeug | = Anzeige Grün | | |
| | | | | Nicht weiter in 3.1 | Ja | |
| | | | | = Anzeige Rot | | |
| 3.4.1 | Anlage befüllen auf Abschaltdruck | | | | | |
| 4. | **Abreisssicherung - Vorratsleitung** | P8; P9 | Funktionsprüfung | = Anzeige Gelb | | Ja |
| Nur bei | Bei Abriss der Vorratsleitung darf kein | | Abreißsicherung | P9= 0 bar | | |
| Nkw mit | ungewolltes "Einbremsen" des Nkw erfolgen. | | - Vorratsleitung- | = Anzeige Grün | Ja | |
| Anhänger | | | | | | |
| | | | | | | |
| steuerung | | | | | | |
| 5. | **Abreißsicherung - Bremsleitung** | P8; P9 | Funktionsprüfung | = Anzeige Gelb | | Ja |
| Nur bei | Bei Abriss der Bremsleitung muss bei voller | | Abreißsicherung | P8= 0 bar | | |
| Nkw mit | Betätigung der BBA des Nkw der Druck in der | | - Bremsleitung- | = Anzeige Grün | Ja | |
| Anhänger | Vorratsleitung zum Anhängfahrzeug in 2 sec. auf | | | | | |
| | | | | | | |
| steuerung | 1.5 bar sinken und somit die selbständige | | | | | |
| | Bremsung des Anhängefahrzeuges | | | | | |
| | gewährleisten. | | | | | |
| 6. | **Abstufbarkeit** | P9 | Funktionsprüfung | = Anzeige Gelb | | Ja |
| | Bremskraftregler in Vollaststellung bringen | | Abstufbarkeit | P9= 6.5 - 8.5 bar | | |
| | Bei Fzg. mit Blattfederung an der Hinterachse | | | = Anzeige Grün | Ja | |
| | Bei stehendem Motor Druck am Kupplungskopf der Vorratsleitung prüfen. | | | | | |
| 7.1 | **Zeitverhalten** | P6; P7; P8 | Funktionsprüfung | = Anzeige Gelb | | Ja |
| | Bei Zügig durchgetretenem Bremspedal bis zur | | Zeitverhalten | P6= 10. 0 bar | | |
| | Vollbremsung (Fahrschalter EIN) muss der | | | P7= 10.0 bar | | |
| | Druckaufbau in den Bremszylindern und am | | | P8= 6.5 - 8.5 bar | | |
| | Kupplungskopf der Bremsleitung unmittelbar folgen. | | | = Anzeige Grün | Ja | |
| 7.2 | Bei Vollbremsung den Druck am Kupplungskopf | P8 | Funktionsprüfung | = Anzeige Gelb | | Ja |
| | der Bremsleitung prüfen | | Zeitverhalten | P8= 6.5 - 8.5 bar | | |
| | | | | = Anzeige Grün | Ja | |
| 7.3 | **Abstufbarkeit** | | Funktionsprüfung | | | Ja |
| | Der Druck muss durch das Bremspedal ausreichend abstufbar sein | | Abstufbarkeit | | | |
| | | | Beurteilung des | | | |
| | | | Bremspedals über den | | | |
| | | | gesamten | | | |
| | | | Betätigungszeitraum | | | |

Nachfolgend wird die vorliegende Erfindung anhand eines Ausführungsbeispiels zusammen mit den beigefügten Figuren näher erläutert. Darin zeigen:
- Fig. 1: sechs schematisch dargestellte als Telemetriemodul bezeichnete Funksensoren;
- Fig. 2: einen schematisch dargestellten Datenlogger;
- Fig. 3: eine schematisch dargestellte Laptop-Anbindung
- Fig. 4: ein Flussdiagramm, welches einen Messablauf beispielhaft darstellt;
- Fig. 5: eine diagrammhafte Auswertung eines Bremsbands;
- Fig. 6: eine diagrammhafte Auswertung des Bremsdrucks über der Zeit.

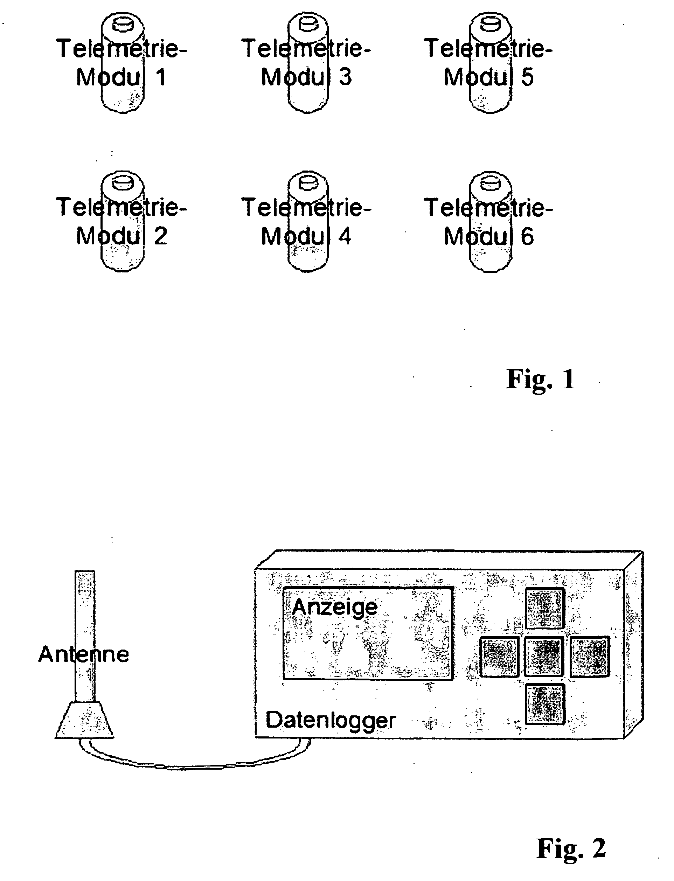

Die in Figur 1 schematisch dargestellten sechs Telemetriemodule bzw. Funksensoren bilden eine Komponente der erfindungsgemäßen Vorrichtung zur Prüfung einer Druckluftbremsanlage eines Nutzfahrzeugs. Dabei sind die Funksensoren als Drucksensoren ausgebildet, die im Prüfbetrieb mit den entsprechenden Prüfanschlüssen der jeweiligen Radbremszylinder an den Achsen sowie am Kupplungskopf Bremse (pm) verbunden sind. Die Funksensoren weisen im vorliegenden Ausführungsbeispiel jeweils eine Analog-/Digitalwandlereinheit und eine Sende- und Empfangseinheit auf. Ferner verfügen die hier gezeigten die Funksensoren über eine programmierbare Steuereinheit Zum Betrieb der elektrischen Sensorkomponenten verfügt jeder der Sensoren über einen wiederaufladbaren Akkumulator. Schließlich weisen die im vorliegenden Beispiel dargestellten Funksensoren eine lokale Datenspeichereinheit auf, so dass die Messdaten bei schlechtem oder nicht vorhandenem Funkkontakt zunächst lokal im Funksensor zwischengespeichert werden können.

Die Sensoren sollten an einem funktechnisch günstigen Ort befestigt werden. An einem Anhängerfahrzeug ist die Befestigung an der Fahrzeugaußenseite in bestimmten Anwendungsfällen empfehlenswert. Zur Verbesserung der Funkleistung können an den Sensoren Zusatzantennen montiert werden. Die Verbindung zu den einzelnen Radbremszylindern erfolgt dann mittels Druckschläuchen. Der Sensor am Kupplungskopf Bremse (pm) wird zwischen den gelben Kupplungsköpfen von Zugfahrzeug und Anhängerfahrzeug mittels einem Kupplungskopf-Adapter angeschlossen. Die Sensoren sind für einen Messbereich von 0 bar bis 16 bar ausgelegt.

Figur 2 zeigt eine schematische Darstellung einer ersten Ausführungsform, der so genannten Telemodul- Datenlogger Variante, mit einem beispielhaften Datenlogger gemäß einer Ausführungsform der vorliegenden Erfindung. Der Datenlogger ist mit einer Funkantenne verbunden und weist bei diesem Ausführungsbeispiel eine Anzeige und Kontrollregler auf. Einfachere Ausführungsformen eines erfindungsgemäßen Datenloggers können als "Black Box" ausgeführt sein und weisen lediglich einen Antennenanschluss zum Senden und Empfangen von Messdaten sowie eine programmierbare Steuereinheit und eine Speichereinheit auf.

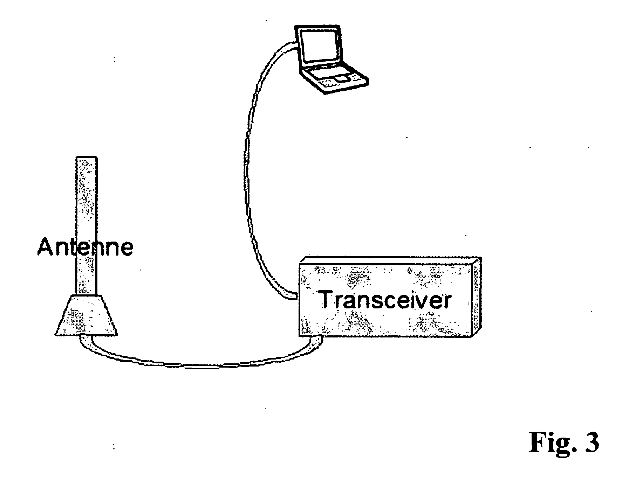

Eine alternative Ausführungsform der vorliegenden Erfindung, die so genannte Telemodul-Laptop Variante, weist die in Figur 3 schematisch dargestellte Laptop-Anbindung mittels eines so genannten Transceiver auf. Dabei werden die entsprechenden Messsignale der Funksensoren über die Antenne empfangen und über den Transceiver direkt an einen Laptop Computer weitergeleitet. Speicherung, Aufbereitung und Auswertung der Messdaten erfolgt dann direkt im Laptop Computer. Auch wird durch den Laptop Computer und die darauf installierte Software die Messreihenfolge und das Messprogramm vorgegeben.

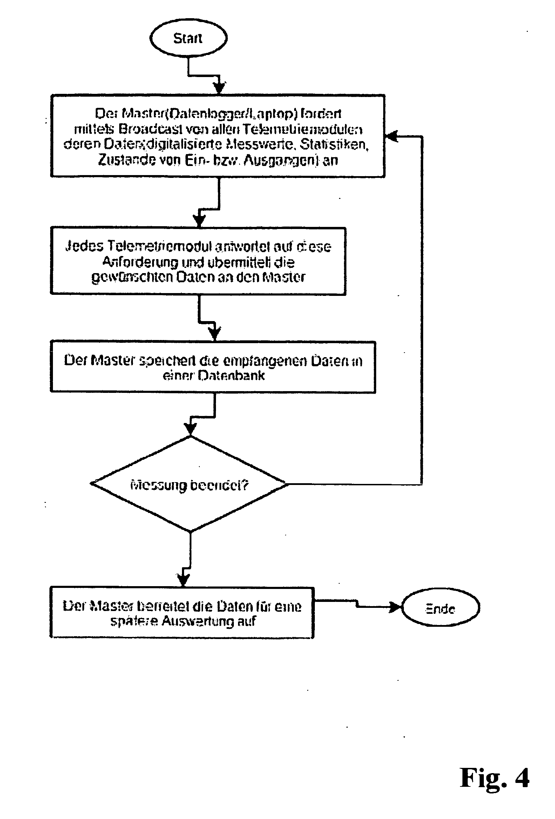

Bei den beiden Ausführungsformen nach Figur 2 und Figur 3 werden die in Figur 1 gezeigten Telemetriemodule an den Anschlüssen des Fahrzeugs angebracht und danach die Zuordnung der Sensoren zu den Achsen festgelegt. Danach kann die Messung starten. Ein entsprechender Messablauf ist beispielhaft in Figur 4 dargestellt. Dabei fordert der Datenlogger/Laptop nach dem Programmstart mittels Broadcast von allen Telemetriemodulen, d.h. von den oben beschriebenen Funksensoren, deren Messdaten an. Diese Messdaten enthalten digitalisierte Messwerte, Statistiken, Zustandsdaten von Ein- und Ausgängen, Zeitangaben zu den Messungen, etc. Die angesprochenen Telemetriemodule antworten auf diese Anforderungen nacheinander in einer festgelegten Reihenfolge und übermitteln die gewünschten Daten an den Datenlogger/an das Laptop. Die Datenabfrage erfolgt dabei nach einem von der Prüfsoftware festgelegtem Abfrageschema, was nach dem Start der Messreihe zwangsgeführt ist, d.h. erst nach Abschluss einer vorgeschriebenen Messung kann die nächste Messung erfolgen. Der Datenlogger/ das Laptop speichert die erhaltenen Daten in einer Datenbank und führt ggf. eine weitere Abfrage, beispielsweise bei einer Überprüfungsfahrt, durch. Nach Beendigung der Messung werden die Daten für die Weiterbearbeitung, d.h. entsprechende Auswertungen aufbereitet.

In einem alternativen Messablauf werden die Funksensoren per Funk synchronisiert und sammeln dann zunächst eigenständig die Messdaten und legen diese in dem im Funksensor integrierten Zwischenspeicher ab. Erst nach vollständigem Abschluss der Messung werden die Messdaten dann per Funk komplett übertragen.

Die maximal erreichbare Mess-Frequenz bei sechs Telemetriemodulen beträgt im vorliegenden Ausführungsbeispiel 120 Hz. Dabei können bis zu 254 Telemetrie-Module angesteuert werden. Die Übertragung erfolgt im vorliegenden Ausführungsbeispiel im 433 MHz bzw. im 868 MHz Band. Dabei werden Reichweiten zwischen Telemetrimodul und Datenlogger/Laptop Antenne von 300 m im Freien und 10m bis 25m am Fahrzeug erzielt.

Nach der Erfassung der Druckmesswerte können noch weitere Messwerte hinzugefügt werden, wie beispielsweise die Temperaturen der Radbremsen, die Bremskräfte, die beispielsweise auf einem stationären Bremsenprüfstand ermittelt werden, und die Ansprechdrücke.

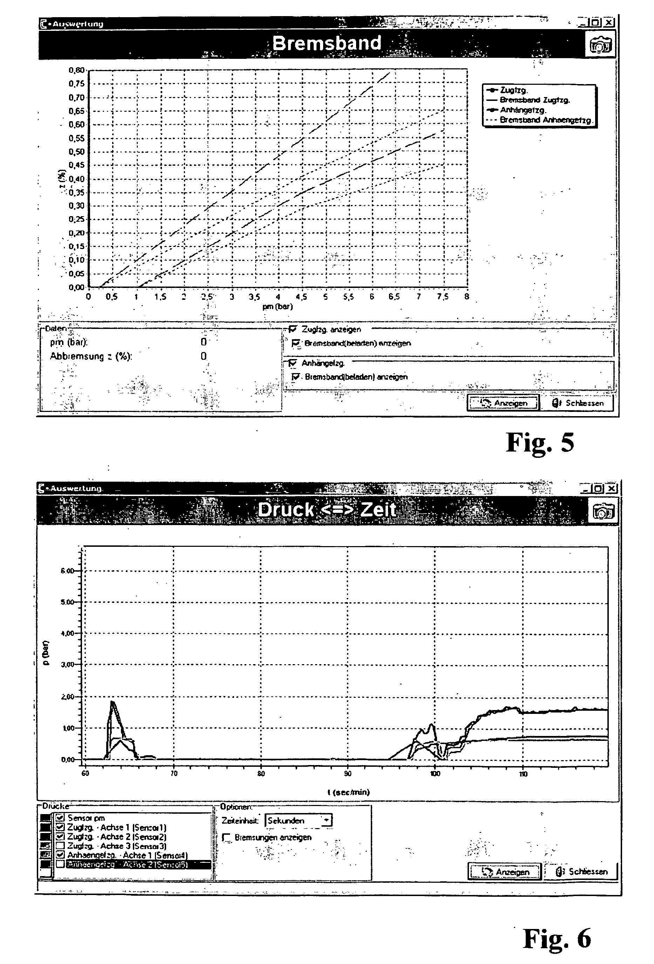

Nach diesen Messung erfolgt die Auswertung, die unter anderem das Fahrprofil und diverse graphische Darstellungen beinhalten kann. In Figur 5 ist beispielhaft die eine diagrammhafte Auswertung eines Bremsbands dargestellt. Figur 6 zeigt eine diagrammhafte Auswertung des Bremsdrucks über der Zeit.

Um Langzeitbeobachtungen durchführen zu können, besteht die Möglichkeit mehrere Prüfungen miteinender zu vergleichen. Des weiteren kann jede Prüfung an ein Service Center per e-mail gesendet werden oder, falls kein Internetzugriff besteht, auf einem mobilen Datenträger abgelegt werden.

Die vorliegende Erfindung ist nicht auf die dargestellten Ausführungsbeispiele beschränkt sondern ist lediglich durch den Schutzbereich der nachfolgenden Patentansprüche begrenzt.

## Patentansprüche

1. Verfahren zur Prüfung einer Druckluftbremsanlage eines Nutzfahrzeugs während des Betriebs mittels einer Prüfvorrichtung mit einer Empfangseinheit, mit einem Datenlogger und/oder einer Datenverarbeitungseinheit zum Ausführen einer Prüfsoftware sowie einem oder mehreren Funksensoren, die an entsprechenden Prüfanschlüssen der Druckluftbremsanlage angeschlossen sind, wobei das Verfahren folgende Schritte aufweist:
- Eingabe wenigstens eines Betriebsparameters des Fahrzeugs unter Berücksichtigung eines ersten in einem Prüfsystem hinterlegten zumindest einen Prüfschritt aufweisenden Prüfablaufs;
- Erfassen wenigstens eines Messwerts für einen in einem Bremskreis und/oder an einem Bremselement der Druckluftbremsanlage anliegenden Druck der durch einen Verdichter verdichteten Luft;- Übertragen des wenigstens einen Messwerts an die zentrale, vorzugsweise im Fahrerhaus angeordnete Datenverarbeitungseinheit;
- Speicherung und ggf. Weiterverarbeitung oder Weiterleitung des wenigstens einen aufgenommenen Messwerts durch die Datenverarbeitungseinheit sowie Verändern wenigstens eines Betriebsparameters des Fahrzeugs, sobald der erste Prüfablauf abgearbeitet ist;
**dadurch gekennzeichnet, dass** durch das Starten der Prüfsoftware ein festgelegtes Abfrageschema vorgegeben wird, welches nach dem Start einer Messreihe zwangsgeführt ist; dass vom Datenlogger und/oder von der Datenverarbeitungseinheit Messdaten von den Funksensoren angefordert werden und
dass die Funksensoren auf diese Anforderungen nacheinander in einer festgelegten Reihenfolge antworten und die gewünschten Daten übermitteln oder,
dass die Funksensoren per Funk synchronisiert werden und zunächst eigenständig die Messdaten in einem in den Funksensoren integrierten Zwischenspeicher ablegen und erst nach Abschluss der Messung per Funk komplett übermitteln.

2. Verfahren zur Prüfung einer Druckluftbremsanlage eines Nutzfahrzeugs nach Patentanspruch 1, wobei ferner folgende Schritte vorgesehen sind:
- Durchführen einer Überprüfungsfahrt mit Messwerterfassung für einen in einem Bremskreis und/oder an einem Bremselement der Druckluftbremsanlage anliegenden Druck der durch einen Verdichter verdichteten Luft; und/oder
- Befahren eines Rollenbremsprüfstands mit Messwerterfassung für einen in einem Bremskreis und/oder an einem Bremselement der Druckluftbremsanlage anliegenden Druck der durch einen Verdichter verdichteten Luft.

3. Verfahren zur Prüfung einer Druckluftbremsanlage eines Nutzfahrzeugs nach Patentanspruch 1 oder 2, wobei ferner ein Schritt zur Erfassung der Temperatur der Bremsscheibe / Bremstrommel vorgesehen ist.

4. Verfahren zur Prüfung einer Druckluftbremsanlage eines Nutzfahrzeugs nach einem der vorangehenden Patentansprüche, wobei die Messdatenerfassung die Erfassung der statischen und/oder dynamischen Drücke an den angeschlossenen Sensoren an den Achsen und am Kupplungskopf Bremse (pₘ) aufweist.

5. Verfahren zur Prüfung einer Druckluftbremsanlage eines Nutzfahrzeugs nach einem der vorangehenden Patentansprüche, wobei die Messdatenerfassung ferner die Erfassung der aktuelle Stärke der Bremsbeläge und/oder Bremsscheiben aufweist.

6. Verfahren zur Prüfung einer Druckluftbremsanlage eines Nutzfahrzeugs nach einem der vorangehenden Patentansprüche, wobei die Messdatenerfassung die Erfassung der aktuellen
Achslasten aufweist.

7. Verfahren zur Prüfung einer Druckluftbremsanlage eines Nutzfahrzeugs nach einem der vorangehenden Patentansprüche, wobei die Messdatenerfassung die Erfassung der Bremskräfte an den Achsen aufweist.

8. Verfahren zur Prüfung einer Druckluftbremsanlage eines Nutzfahrzeugs nach einem der vorangehenden Patentansprüche, wobei die Messdatenerfassung die Erfassung der aktuellen Ansprechdrücke aufweist.

9. Verfahren zur Prüfung einer Druckluftbremsanlage eines Nutzfahrzeugs nach einem der vorangehenden Patentansprüche, wobei die Weiterverarbeitung das automatische Erstellen eines Bremsbands vorsieht.

10. Verfahren zur Prüfung einer Druckluftbremsanlage eines Nutzfahrzeugs nach einem der vorangehenden Patentansprüche, wobei die Weiterverarbeitung das automatische Erstellen eines Bremsprofils vorsieht.

11. Verfahren zur Prüfung einer Druckluftbremsanlage eines Nutzfahrzeugs nach einem der vorangehenden Patentansprüche, wobei die Weiterverarbeitung die automatische Darstellung eines oder mehrerer Zylinderdrücke über einem Referenzpunkt vorsieht.

12. Verfahren zur Prüfung einer Druckluftbremsanlage eines Nutzfahrzeugs nach einem der vorangehenden Patentansprüche, wobei die Weiterverarbeitung die automatische Darstellung des Druckverlaufs wenigstens einer Achse über der Zeit während wenigstens einer Bremsung vorsieht.

13. Vorrichtung zum Prüfen einer Druckluftbremsanlage eines Nutzfahrzeugs während des Betriebs mit einer Empfangseinheit mit einem Datenlogger und/oder einer Datenverarbeitungseinheit zum Ausführen einer Prüfsoftware sowie einem oder mehreren Funksensoren, die an entsprechenden Prüfanschlüssen der Druckluftbremsanlage anschließbar
sind, und mit denen der in einem Bremskreis und/oder an einem Bremselement anliegende Druck erfassbar ist, wobei die Datenverarbeitungseinheit ein Speicherelement aufweist, **dadurch gekennzeichnet dass,** in dem Speicherelement der Datenverarbeitungsanlage zumindest eine Prüfsoftware mit einem festgelegten Abfrageschema hinterlegt ist, welches nach dem Start einer Messreihe zwangsgeführt ist, und wobei die Funksensoren jeweils eine Sende- und Empfangseinheit aufweisen, mittels der Messwerte, Zustandsdaten, Zeitangaben und Statistiken nach dem festgelegten Abfrageschema abfragbar sind.

14. Vorrichtung zum Prüfen einer Druckluftbremsanlage eines Nutzfahrzeugs nach Patentanspruch 13, wobei die Datenverarbeitungseinheit vorzugsweise Datenschnittstellen aufweist, über die die erfassten Druckmesswerte in die Datenverarbeitungseinheit eingelesen werden, einen Datenlogger zur Speicherung der Messwerte sowie weitere Datenschnittstellen, an die externe Geräte, wie Drucker, Display, Fahrzeugführungsrechner und/oder eine externe Datenverarbeitungseinheit, anschließbar sind.

15. Vorrichtung zum Prüfen einer Druckluftbremsanlage eines Nutzfahrzeugs nach einem der Patentansprüche 13 bis 14, wobei die Funksensoren jeweils über eine Analog- /Digitalwandlereinheit verfügen.

16. Vorrichtung zum Prüfen einer Druckluftbremsanlage eines Nutzfahrzeugs nach einem der Patentansprüche 13 bis 15, wobei die Funksensoren ferner eine lokale Datenspeichereinheit aufweisen.

17. Vorrichtung zum Prüfen einer Druckluftbremsanlage eines Nutzfahrzeugs nach einem der Patentansprüche 13 bis 16, wobei die Funksensoren ferner eine programmierbare Steuereinheit aufweisen.

18. Vorrichtung zum Prüfen einer Druckluftbremsanlage eines Nutzfahrzeugs nach einem der Patentansprüche 13 bis 17, wobei die Funksensoren Aktuatoren zum Ansteuern von Ventilen aufweisen.

## Claims

1. A method for testing a compressed-air brake system of a commercial vehicle in operation by means of a testing device with a receiving unit, with a data logger and/or a data processing unit for executing a test software and one or a plurality of radio sensors which are connected to corresponding test terminals of the compressed-air brake system, wherein the method comprises the following steps:
- inputting of at least one operating parameter of the vehicle taking into account a first test sequence comprising at least one test step stored in a test system;
- detecting of at least one measuring value for a pressure of the air compressed by a compressor applied in a brake circuit and/or to a brake element of the compressed-air brake system;
- transferring of the at least one measuring value to the central data processing unit preferably arranged in the driver's cabin;
- storage and if applicable further processing or transmission of the at least one recorded measuring value by the data processing unit and changing of at least one operating parameter of the vehicle, as soon as the first test sequence has been executed;
**characterized in that** via the starting of the test software a predetermined query pattern is defined which, following the start of a measurement series, follows mandatory steps; **in that** measured data from the radio sensors is requested by the data logger and/or by the data processing unit and **in that** the radio sensors successively reply to these requests in a predetermined sequence and transmit the desired data or, **in that** the radio sensors are synchronised via radio signals and initially store the measured data independently in an intermediate storage device integrated in the radio sensors, and completely transmit said measured data via radio signals only after completion of the measurement.

2. The method for testing a compressed-air brake system of a commercial vehicle according to Patent Claim 1, wherein in addition the following steps are provided:
- carrying out a verification run with measuring value detection for a pressure of the air compressed by a compressor applied in a brake circuit and/or to a brake element of the compressed-air brake system; and/or
- driving on a roller brake test stand with measuring value detection for a pressure of the air compressed by a compressor applied in a brake circuit and/or to a brake element of the compressed-air brake system.

3. The method for testing a compressed-air brake system of a commercial vehicle according to Patent Claim 1 or 2, wherein furthermore a step for detecting the temperature of the brake disc/brake drum is provided.

4. The method for testing a compressed-air brake system of a commercial vehicle according to any one of the preceding patent claims, wherein the measuring data detection comprises detecting the static and/or dynamic pressures at the connected sensors on the axles and on he coupling head brake (pₘ).

5. The method for testing a compressed-air brake system of a commercial vehicle according to any one of the preceding patent claims, wherein the measuring data detection furthermore comprises the detection of the current thickness of the brake pads and/or brake discs.

6. The method for testing a compressed-air brake system of a commercial vehicle according to any one of the preceding patent claims, wherein the measuring data detection comprises the detection of the current axle loads.

7. The method for testing a compressed-air brake system of a commercial vehicle according to any one of the preceding patent claims, wherein the measuring data detection comprises the detection of the brake forces on the axles.

8. The method for testing a compressed-air brake system of a commercial vehicle according to any one of the preceding patent claims, wherein the measuring data detection comprises the detection of the current response pressures.

9. The method for testing a compressed-air brake system of a commercial vehicle according to any one of the preceding patent claims, wherein the further processing provides the automatic generation of a braking diagramm.

10. The method for testing a compressed-air brake system of a commercial vehicle according to any one of the preceding patent claims, wherein the further processing provides for the automatic generation of a braking pattern.

11. The method for testing a compressed-air brake system of a commercial vehicle according to any one of the preceding patent claims, wherein the further processing provides for the automatic representation of one or a plurality of cylinder pressures over a reference point.

12. The method for testing a compressed-air brake system of a commercial vehicle according to any one of the preceding patent claims, wherein the further processing provides for the automatic representation of the pressure curve of at least one axle over the time during at least one brake actuation.

13. A device for testing a compressed-air brake system of a commercial vehicle during operation with a receiving unit with a data logger and/or a data processing unit for executing a test software and one or a plurality of radio sensors which are connectable to the corresponding test connections of the compressed-air brake system, and with which the pressure applied in a brake circuit and/or to a brake element detectable, wherein the data processing unit comprises a storage element, **characterized in that** at least one test software with a predetermined query pattern is stored in the storage element of the data processing system, which follows mandatory steps following the start of a measurement series and wherein the radio sensors comprise each a sending and receiving unit, by means of which measuring values, status data, time details and statistics are queriable according to the predetermined query pattern.

14. The device for testing a compressed-air brake system of a commercial vehicle according to Patent Claim 13, wherein the data processing unit preferably comprises data interfaces, via which the detected pressure measuring values are read into the data processing unit, a data logger for the storage of the measuring values and additional data interfaces to which external devices such as printer, display, driver's computer and/or an external data processing unit are connectable.

15. The device for testing a compressed-air brake system of a commercial vehicle according to any one of the Patent Claims 13 to 14, wherein the radio sensors have each an analogue/digital converter unit.

16. The device for testing a compressed-air brake system of a commercial vehicle according to one of the Patent Claims 13 to 15, wherein the radio sensors additionally comprise a local data storage unit.

17. The device for testing a compressed-air brake system of a commercial vehicle according to any one of the Patent Claims 13 to 16, wherein the radio sensors furthermore comprise a programmable control unit.

18. The device for testing a compressed-air brake system of a commercial vehicle according to any one of the Patent Claims 13 to 17, wherein the radio sensors comprise actuators for activating valves.

## Revendications

1. Procédé de vérification d'un dispositif de freinage à air comprimé d'un véhicule utilitaire en cours de fonctionnement au moyen d'un dispositif de vérification présentant une unité de réception, un journal de données et/ou une unité de traitement des données destinée à l'exécution d'un logiciel de vérification, ainsi qu'un ou plusieurs capteurs radio branchés sur des connecteurs de vérification correspondants du dispositif de freinage à air comprimé, et dans lequel le procédé comprend les étapes ci-après :
- entrée d'au moins un paramètre de fonctionnement du véhicule avec prise en compte d'un premier processus de vérification comportant au moins une étape de vérification consigné dans un système de vérification.
- acquisition d'au moins une valeur mesurée de la pression de l'air comprimé par un compresseur, mesurée au niveau du circuit de freinage et/ou d'un élément des freins du dispositif de freinage à air comprimé.
- transmission d'au moins une valeur mesurée à l'unité centrale de traitement des données qui, de préférence, est placée dans la cabine du conducteur.
- sauvegarde et, le cas échéant, traitement ultérieur ou transfert d'au moins de la valeur mesurée reçue par l'unité de traitement des données ainsi que modification d'au moins un paramètre de fonctionnement du véhicule, dès que la première étape de vérification est traitée ;
**caractérisé en ce que** un schéma défini de requêtes est donné par le démarrage du logiciel de vérification suit, lequel est forcément exécuté après le démarrage d'une série de mesures ;
**en ce que** des données de mesure sont requises de la part des capteurs radio par le journal de données et/ou l'unité de traitement des données et
**en ce que** les capteurs radio répondent, l'un après l'autre, à ces demandes en suivant un ordre défini, et transmettent les données souhaitées ou
**en ce que** les capteurs radio sont synchronisés par signal radio et transfèrent de manière autonome d'abord les données mesurées à un disque de stockage intermédiaire intégré dans les capteurs radio avant de les transmettre intégralement par signal radio à la fin de la procédure de mesure.

2. Procédé de vérification d'un dispositif de freinage à air comprimé d'un véhicule utilitaire selon la Revendication 1 présentant, en outre, les étapes suivantes :
- Réalisation d'une conduite-test avec acquisition de valeurs mesurées de la pression de l'air comprimé par un compresseur, mesurée au niveau du circuit de freinage et/ou d'un élément des freins du dispositif de freinage à air comprimé.
- Passage sur un banc d'essai de freinage à rouleaux avec acquisition de valeurs mesurées de la pression de l'air comprimé par un compresseur, mesurée au niveau du circuit de freinage et/ou d'un élément des freins du dispositif de freinage à air comprimé.

3. Procédé de vérification d'un dispositif de freinage à air comprimé d'un véhicule utilitaire selon la Revendication 1 ou 2 prévoyant, en outre, une étape d'acquisition de la température du disque / tambour de frein.

4. Procédé de vérification d'un dispositif de freinage à air comprimé d'un véhicule utilitaire selon l'une quelconque des Revendications précédentes dans lequel l'acquisition des valeurs mesurées comporte l'acquisition des pressions statiques et/ou dynamiques au niveau des capteurs reliés aux essieux et à la tête d'accouplement de frein (pₘ).

5. Procédé de vérification d'un dispositif de freinage à air comprimé d'un véhicule utilitaire selon l'une quelconque des Revendications précédentes dans lequel l'acquisition des valeurs mesurées comporte, en outre, l'acquisition de l'épaisseur actuelle des plaquettes de frein et/ ou des disques de frein.

6. Procédé de vérification d'un dispositif de freinage à air comprimé d'un véhicule utilitaire selon l'une quelconque des Revendications précédentes dans lequel l'acquisition des valeurs mesurées comporte l'acquisition des charges actuelles des essieux.

7. Procédé de vérification d'un dispositif de freinage à air comprimé d'un véhicule utilitaire selon l'une quelconque des Revendications précédentes dans lequel l'acquisition des valeurs mesurées comporte l'acquisition de la force de freinage au niveau des essieux.

8. Procédé de vérification d'un dispositif de freinage à air comprimé d'un véhicule utilitaire selon l'une quelconque des Revendications précédentes dans lequel l'acquisition des valeurs mesurées comporte 1' l'acquisition des pressions de réponse actuelles.

9. Procédé de vérification d'un dispositif de freinage à air comprimé d'un véhicule utilitaire selon l'une quelconque des Revendications précédentes dans lequel le traitement ultérieur prévoit la production automatique d'un diagramme de freinage.

10. Procédé de vérification d'un dispositif de freinage à air comprimé d'un véhicule utilitaire selon l'une quelconque des Revendications précédentes dans lequel le traitement ultérieur prévoit la production automatique d'un profil de freinage.

11. Procédé de vérification d'un dispositif de freinage à air comprimé d'un véhicule utilitaire selon l'une quelconque des Revendications précédentes dans lequel le traitement ultérieur prévoit la représentation automatique d'une ou plusieurs pressions de cylindre au delà d'un point de référence.

12. Procédé de vérification d'un dispositif de freinage à air comprimé d'un véhicule utilitaire selon l'une quelconque des Revendications précédentes dans lequel le traitement ultérieur prévoit la représentation automatique de l'évolution de la pression d'au moins un des essieux sur une durée correspondant à au moins un freinage.

13. Dispositif de vérification d'un dispositif de freinage à air comprimé d'un véhicule utilitaire en cours de fonctionnement au moyen d'une unité de réception avec un journal de données et/ou une unité de traitement des données destinée à l'exécution d'un logiciel de vérification, ainsi qu'un ou plusieurs capteurs radio pouvant être branchés sur des connecteurs de vérification correspondants du dispositif de freinage à air comprimé, et au moyen desquels la pression présente dans un circuit de freinage et/ou au niveau d'un élément du frein peut être acquise,
dans lequel l'unité de traitement des données présente un moyen de stockage, **caractérisé en ce que** le moyen de stockage du dispositif de traitement des données comporte au moins un logiciel de vérification présentant un schéma défini de requêtes lequel est forcément exécuté après le démarrage d'une série de mesures, et dans lequel les capteurs radio présentent chacun une unité d'émission et de réception, au moyen desquelles les valeurs mesurées, les données concernant l'état, les indications temporelles et les statistiques sont interrogeables selon le schéma défini de requêtes.

14. Dispositif de vérification d'un dispositif de freinage à air comprimé d'un véhicule utilitaire selon la Revendication 13 dans lequel l'unité de traitement des données présente, de préférence, des interfaces de données au moyen desquelles les valeurs de pression mesurées sont entrées dans l'unité de traitement des données ; un journal de données pour la sauvegarde des valeurs mesurées ainsi que d'autres interfaces de données pouvant être connectés à des appareils externes comme une imprimante, un écran, un calculateur d'itinéraire et/ou une unité de traitement de données externe.

15. Dispositif de vérification d'un dispositif de freinage à air comprimé d'un véhicule utilitaire selon l'une des Revendications 13 ou 14 dans lequel les capteurs radio disposent chacun d'une unité de conversion analogue / numérique.

16. Dispositif de vérification d'un dispositif de freinage à air comprimé d'un véhicule utilitaire selon l'une des Revendications 13 à 15 dans lequel les capteurs radio présentent, en outre, une unité locale de sauvegarde des données.

17. Dispositif de vérification d'un dispositif de freinage à air comprimé d'un véhicule utilitaire selon l'une des Revendications 13 à 16 dans lequel les capteurs radio présentent, en outré, une unité de commande programmable.

18. Dispositif de vérification d'un dispositif de freinage à air comprimé d'un véhicule utilitaire selon l'une des Revendications 13 à 17 dans lequel les capteurs radio présentent, en outre, un actuateur destiné à la commande de soupapes.
